Europäisches Patentamt

European Patent Office

Office européen des brevets

(19)

(11) Publication number: **0 440 203 A1**

## (12) EUROPEAN PATENT APPLICATION

(21) Application number: 91101219.3

(22) Date of filing: 30.01.91

(51) Int. Cl.5: **A23L 1/00**, A23L 1/48, A23G 1/00

(30) Priority: 01.02.90 JP 20381/90

(43) Date of publication of application:
07.08.91 Bulletin 91/32

(84) Designated Contracting States:
BE CH DE FR GB IT LI NL

(71) Applicant: LOTTE CO., LTD
No. 20-1, Nishi-Shinjuku 3-chome
Shinjuku-ku Tokyo(JP)

(72) Inventor: Toshio, Takemori
3-19-19 Minami Ooizumi
Nerima-ku Tokyo(JP)
Inventor: Toshinobu, Tsurumi
325-5 Ooaza Sakata
Okegawa-shi, Saitama-ken(JP)
Inventor: Masahiro, Takagi
5-1 Shinmatsudo
Matsudo-shi, Chiba-ken(JP)
Inventor: Masaharu, Tanabe
3-31-1 Yamato-cho
Nakano-ku Tokyo(JP)

(74) Representative: Grättinger, Günter
Wittelsbacherstrasse 5 Postfach 16 49
W-8130 Starnberg(DE)

(54) **Emulsified composition and production method thereof.**

(57) There is disclosed an emulsified composition wherein it has a structure in which a hydrophilic anhydrous solid material and a water-containing food article independently coexist in oil in a state of fine particles respectively. There is also disclosed a method for producing an emulsified compositoin having a structure in which a hydrophilic anhydrous solid material and a water-containing food article independently coexist in oil in a state of fine particles respectively, wherein in the first step is formed a suspension in which a hydrophilic anhydrous solid material not more than 60 $\mu$ is dispersed in oil, in the second step is formed an emulsion in which a water-containing food article not more than 10 $\mu$ is dispersed in oil, and in the third step are mixed and agitated said suspension and said emulsion to make a homogeneous material.

## EMULSIFIED COMPOSITION AND PRODUCTION METHOD THEREOF

The present invention relates to an oil-based emulsified composition and a production method thereof having a distinct structure containing water-containing food articles such as fruit juice, vegetable juice, yogurt, raw eggs, liquor and the like, in particular relates to an emulsified composition and a production method thereof which is a food article having a structure in which a hydrophilic anhydrous solid material and a water-containing food article coexist in oil in a stable state, and having very delicious and smooth mouth-feel maintaining the original taste and flavor of the water-containing food article.

As main raw materials for the oil-based emulsified composition are the hydrophilic anhydrous solid material such as the oils and fats, sugars and the like, as well as the water-containing food article and the like, however, simple mixing, making to fine particles, or emulsification of them results in binding and dissolving of the hydrophilic anhydrous solid material and the water-containing food article, and the original taste and flavor of the components thereof is damaged.

As one in which fine particles of water or an aqueous solution are dispersed in oil (the emulsion) have been hitherto widely known emulsified food articles such as margarine and the like. On the other hand, emulsified food articles in which tasty components containing water are dispersed in oil are widely known for cream, spread, confectionery and bakery. In such emulsified food articles, all of the tasty components are homogenized as an aqueous solution or a dispersed liquid in water to be dispersed in oil. Therefore, it has been difficult to use together two kinds of ones which change in quality after mixing such as for example a combination of a protein and fruit juice having a low pH. In addition, even when the mixing is possible as such, in many cases the original taste and flavor of the tasty components are damaged, which has been a problem.

On the other hand, as one in which hydrophilic anhydrous solid fine particles are dispersed in oil (the suspension) have been hitherto widely known emulsified food articles such as sandwich cream of biscuits, peanut butter, chocolate-like food articles and the like. However, only the anhydrous material can be used for those as a raw material, and it is impossible to produce this kind of emulsified food article in which, for example, a fresh food article containing water is used.

Namely, an emulsified composition in which water or an aqueous solution and the hydrophilic anhydrous solid fine particles independently coexist to be stably dispersed in oil is not known, and there has been no production method thereof.

The object of the present invention is to provide an emulsified composition and a production method thereof which is a food article containing the water-containing food article containing water such as fruit juice, vegetable juice, yogurt, raw eggs, liquor and the like and the hydrophilic anhydrous solid material, having a structure in which the hydrophilic anhydrous solid material and the water-containing food article coexist in oil in a stable state, and having the very delicious and smooth mouth-feel maintaining the original taste and flavor of the water-containing food article.

According to the present invention, there is provided an emulsified composition wherein it has a structure in which a hydrophilic anhydrous solid material and a water-containing food article independently coexist in oil in a state of fine particles respectively.

Further, according to the present invention, there is provided a method for producing an emulsified compositoin having a structure in which a hydrophilic anhydrous solid material and a water-containing food article independently coexist in oil in a state of fine particles respectively, wherein in the first step is formed a suspension in which a hydrophilic anhydrous solid material not more than 60 $\mu$ is dispersed in oil, in the second step is formed an emulsion in which a water-containing food article not more than 10 $\mu$ is dispersed in oil, and in the third step are mixed and agitated said suspension and said emulsion to make a homogeneous material.

In the present invention, the hydrophilic anhydrous solid material is directed to solid sugars such as sucrose, maltose, lactose and the like, milk products such as whole milk powder, skim milk powder and the like, and starches such as cornstarch and the like. The water-containing food article is directed to fruit juice, jam, paste and the like of fruits, juice, paste and the like of vegetables, milk products such as yogurt, cow's milk, cheese and the like, raw eggs, liguor, honey and the like, and all of other water-containing food articles. The oils and fats (oil) are directed to cocoa butter, palm fat, soybean hardened oil, rape hardened oil, rice bran hardened oil and the like. Incidentally, there is no special limitation with respect to the type of the oils and fats.

It is important to make both the solid material particles and the water-containing food article particles in oil to be fine particles beforehand. If this is insufficient, the particles of them contact, bind, and dissolve during mixing them, so that the taste and flavor change as well as the texture changes, resulting in deterioration of the smoothness and the deliciousness. Making to fine particles in the suspension is especially important also from a view of quality, and making to fine particles in the emulsion is indispensable for the stable emulsification. As a method for making the suspension particles to be fine particles can be utilized a ball mill, roller grinding and the like. In addition, as a method for making the emulsion to be fine particles can be utilized various homogenizers.

It is preferable that the content of the hydrophilic anhydrous solid material is from 25 to 70%, the content of the water-containing food article is from 2 to 40%, and the content of the oils and fats is from 25 to 65%.

If the content of the hydrophilic anhydrous solid material is not more than 25%, there is provided bad eating taste (in the case of much oil portion) or bad stability depending on time (in the case of much water portion), and if it is not less than 70%, the stable emulsification becomes impossible on account of the emulsification structure, so that it is preferably from 25 to 70%, more preferably from 35 to 60%.

If the content of the water-containing article is not more than 2%, the taste and flavor of the water-containing food article is not generally given, and if it is not less than 40%, the stable emulsification becomes difficult, so that it is preferably from 2 to 40%, however, the best content should be optionally determined depending on the food article.

If the content of the oils and fats is not more than 25%, the stable emulsification becomes impossible on account of the emulsification structure, and if it is not less than 65%, although production is possible, oily one having bad eating taste is provided, so that it is preferably from 25 to 65%, more preferably from 30 to 55%.

It is preferable that the particles of the hydrophilic anhydrous solid material in oil are not more than 60 $\mu$, and the particles of the water-containing food article in oil are not more than 10 $\mu$.

If the particles of the hydrophilic anhydrous solid material exceed 60 $\mu$, the rough feeling is given to the tongue resulting in the bad eating taste, so that it is preferably not more than 60 $\mu$, more preferably not more than 45 $\mu$.

If the particles of the water-containing food article exceed 10 $\mu$, the stable emulsification becomes impossible, so that it is preferably not more than 10 $\mu$.

When the suspension is mixed with the emulsion, it is desirable to perform rapid homogenization at a low temperature, and for example, the suspension and the emulsion are rapidly mixed and agitated at a low temperature not more than 40 °C to homogenize. Even if the mixing temperature is about 60 °C, the operation may be possible depending on the blending, however, even in this case, it is preferable to be not more than 40 °C from a view of quality.

In order to stabilize each of the suspension and the emulsion before mixing, an emulsifier can be used.

It is preferable that in the first step for forming the above mentioned suspension, as the emulsifier is used at least one of the emulsifiers selected from the group consisting of soybean phospholipid, sucrose fatty acid ester, polyglycerol fatty acid ester, polyglycerol condensed ricinoleic acid ester, and sorbitan fatty acid ester.

It is preferable that in the second step for forming the above mentioned emulsion, as the emulsifier is used at least one of the emulsifiers selected from the group consisting of sucrose fatty acid ester, polyglycerol fatty acid ester, and polyglycerol condensed ricinoleic acid ester. For the emulsion, soybean phospholipid is not necessarily preferable as the emulsifier, however, sorbitan fatty acid ester can be used.

As described above, simple mixing, making to fine particles, or emulsification of the main raw materials for the oil-based emulsified composition results in binding and dissolving of the hydrophilic anhydrous solid material and the water-containing food article, so that the original taste and flavor of the component is damaged.

The water-containing food article forms the emulsion together with the oils and fats, however, in such conventional emulsified food articles, all of the tasty components are homogenized as an aqueous solution or a dispersed liquid in water to be dispersed in oil, so that it has been difficult to use together two kinds of ones which change in quality after mixing such as for example a combination of a protein and fruit juice having a low pH, and in addition, even when the mixing is possible as such, in many cases the original taste and flavor of the tasty components are damaged and the like, which have been problems.

The fine particles of the hydrophilic anhydrous solid material form the suspension together with the oils and fats, however, in such conventional emulsified food articles, only the anhydrous material can be used as a material, and there have been such problems that it is impossible to produce, for example, one in which a fresh food article containing water is used and the like.

The present invention provides the emulsified composition having the structure in which the hydrophilic anhydrous material is dispersed in oil in a state of fine particles to make the suspension, and the water-containing food article is dispersed in oil in a state of fine particles to make the emulsion, and both of them are mixed and homogenized, thereby each of the hydrophilic anhydrous solid material and the water-containing food article independently coexists.

The novel emulsified food article produced according to the present invention has the fresh taste and flavor of the water-containing food article being stable owing to the particles surrounded by the oils and fats to provide the smooth mouth-feel.

The emulsified composition provided by the present invention has an excellent nature for sandwich cream of biscuits, fillings for pies, center cream for chocolates and the like, and when the oils and fats to be used are those which solidify at the normal temperature, it becomes an excellemt oil-based food article as such after cooling.

According to the present invention, there is provided an emulsified composition and a production method thereof which is a food article containing the water-containing food article containing water such as fruit juice, vegetable juice, yogurt, raw eggs, liquor and the like and the hydrophilic anhydrous solid material, having the structure in which the hydrophilic anhydrous solid material and the water-containing food article coexist in oil in a stable state, and having the very delicious and smooth mouth-feel maintaining the original taste and flavor of the water-containing food article.

The present invention will be further explained in detail by examples hereinafter, however, the present invention is not limited only to the following examples.

Example 1

39.5 parts of soybean hardened oil having a rising melting point of 34 $^\circ$C were heated and melted, with which were mixed 25 parts of sugar, 25 parts of whole milk powder, and 0.5 part of soybean phospholipid, and the mixture was treated with a ball mill to make a suspension of solid material particles not more than 40 $\mu$.

Next, 5 parts of the same soybean hardened oil which was the same as described above were heated and melted, which were mixed with 4.5 parts of 5-times concentrated apple juice and 0.5 part of polyglycerol condensed ricinoleic acid ester, which were homogenized to make an emulsion of particles not more than 2 $\mu$.

The obtained suspendion and the emulsion were cooled to 31 $^\circ$C, which were quietly mixed to produce an emulsified composition. This one had a proper sweetness and fresh apple taste and flavor, and it was sandwiched between two sheets of biscuit to cool and solidify to produce a confectionery which was very delicious.

Example 2

30 parts of palm fractioned fat having a rising melting point of 30 $^\circ$C were heated and melted, with which were mixed 15 parts of sugar, 20 parts of whole milk powder, and 0.5 part of soybean phospholipid, and the mixture was treated with a ball mill to make a suspension of solid material particles not more than 25 $\mu$.

Next, 15 parts of butter oil were heated and melted, which were mixed with a mixtuer of 7.5 parts of yogurt and 12 parts of sorbitol and 0.5 part of sucrose erucic acid ester, which were homogenized to make an emulsion of particles not more than 2 $\mu$.

Next, the suspension was subjected to the temperature-tempering treatment to be 27 $^\circ$C, which was quietly mixed with the emulsion which was 27 $^\circ$C in the same manner to obtain an emulsified composition. This one had a proper sweetness and fresh taste and flavor of yogurt, which was sealed in a shell of chocolate to provide a very delicious chocolate product.

**Claims**

1.  An emulsified composition characterized in that it has a structure in which a hydrophilic anhydrous solid material and a water-containing food article independently coexist in oil in a state of fine particles respectively.

2.  The emulsified composition according to claim 1, wherein a content of the hydrophilic anhydrous solid material is from 25 to 70%, a content of the water-containing food article is from 2 to 40%, and a content of oils and fats is from 25 to 65%.

3.  The emulsified compositin according to claim 1, wherein the particles of the hydrophilic anhydrous solid material in oil are not more than 60 $\mu$, and the particles of the water-containing food article in oil are not more than 10 $\mu$.

4.  A method for producing an emulsified compositoin having a structure in which a hydrophilic anhydrous solid material and a water-containing food article independently coexist in oil in a state of fine particles respectively, characterized in that in the first step is formed a suspension in which a hydrophilic anhydrous solid material not more than 60 $\mu$ is dispersed in oil, in the second step is formed an emulsion in which a water-containing food article not more than 10 $\mu$ is dispersed in oil, and in the third step are mixed and agitated said suspension and said emulsion to make a homogeneous material.

5. The method for producing the emulsified composition according to claim 4, wherein said suspension and said emulsion are mixed and agitated at a low temperature not more than 40 °C to be homogenized.

6. The method according to claim 4, wherein in the first step for forming said suspension, as an emulsifier is used at least one of the emulsifiers selected from the group consisting of soybean phospholipid, sucrose fatty acid ester, polyglycerol fatty acid ester, polyglycerol condensed ricinoleic acid ester, and sorbitan fatty acid ester.

7. The method according to claim 4, wherein in the second step for forming said emulsion, as an emulsifier is used at least one of the emulsifiers selected from the group consisting of sucrose fatty acid ester, polyglycerol fatty acid ester, and polyglycerol condensed ricinoleic acid ester.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE - A1 - 2 931 669 (DIBONA) * Page 6, lines 3-14; page 7, lines 15-19; examples * | 1-4,6, 7 | A 23 L 1/00 A 23 L 1/48 A 23 G 1/00 |
| A | GB - A - 1 318 614 (UNILEVER) * Claims; page 2, lines 11-110 * | 1-7 | |
| A | DE - A1 - 2 351 035 (MAIZENA) * Claims; page 2, line 19 - page 3, line 3 * | 1-7 | |
| A | GB - A - 2 113 523 (UNILEVER) * Claims * | 1-7 | |

TECHNICAL FIELDS SEARCHED (Int. Cl.5)

A 23 L 1/00
A 23 G 1/00
A 23 G 3/00

The present search report has been drawn up for all claims

| Place of search | Date of completion of the search | Examiner |
|---|---|---|
| VIENNA | 13-05-1991 | IRMLER |

EPO FORM 1503 03.82 (P0401)